# EUROPEAN PATENT APPLICATION

(11) **EP 4 538 957 A1**
(43) Date of publication of application: **16.04.2025**
(21) Application number: 23819537.4
(22) Date of filing: 27.04.2023
(51) Int. Cl.: G06T 1/00, G06T 7/00, G06T 11/60, G06V 10/762

(54) **IMAGE EDITING DEVICE, IMAGE EDITING METHOD, AND IMAGE EDITING PROGRAM**

(30) Priority: 10.06.2022 JP 2022094035
(71) Applicant: KONICA MINOLTA, INC., Tokyo 100-7015 (JP)
(72) Inventor: MINEGISHI Natsuko, Tokyo 100-7015 (JP); URATANI Shoichi, Tokyo 100-7015 (JP); INOUE Satoru, Tokyo 100-7015 (JP); KANG Seokyung, Tokyo 100-7015 (JP)
(74) Representative: MFG Patentanwälte Meyer-Wildhagen Meggle-Freund Gerhard PartG mbB
(86) International application number: PCT/JP2023/016701
(87) International publication number: WO 2023/238550

(57) **Abstract**

The present invention assists in editing work by a user who uses a searched image. This image editing device extracts image feature amounts from a plurality of images obtained by performing searching, classifies the plurality of images on the basis of the extracted image feature amounts, causes a display unit to display classification results, and thereby provides editing auxiliary information. Specifically, through classification based on the image feature amounts, the image editing device defines, as a first image set, images classified as belonging to a cluster that includes images the number of which being equal to or more than a prescribed proportion of all the plurality of images, causes the display unit to display, in a distinguishing way, the images (first image set display region 36) belonging to the first image set and images (second image set display region 34, third image set display region 35) other than those images.

## Description

### Technical Field

The present invention relates to an image editing device, an image editing method, and an image editing program.

### Background Art

In general, there is known a function of searching for images stored in a device used for work or images obtained by external access online and inserting the found images into an image being designed in software usable for designing.

Some image search functions present images that are further narrowed down from among images that match search conditions, based on tag information and file names added to the images, a user's browsing history, and the like. The user intuitively selects an image to be used from among the presented images.

Further, as a search apparatus for efficiently searching for digital data, there has been proposed an apparatus that extracts digital data satisfying a predetermined condition from a plurality of digital data based on a first attribute and a second attribute representing a generation condition of digital data and displays the extracted digital data (see Patent Literature 1).

### Citation List

### Patent Literature

Patent Literature 1: Japanese Unexamined Patent Publication No. 2003-330942

### Summary of Invention

### Technical Problem

However, in the technology described in Patent Literature 1, images are classified on the basis of data generation conditions, not based on features of the images themselves. Therefore, it has been difficult to provide information for supporting editing work when a user selects an image from among many images to create a design image.

The present invention has been conceived in consideration of the above-described problem in the conventional technology, and an object thereof is to support editing work of a user who uses a searched image. Solution to Problem

In order to solve the above-described problem, according to a first aspect of the present invention, there is provided an image editing device comprising: an extractor that extracts an image feature value from a plurality of images obtained by search; a classifier that classifies the plurality of images based on the extracted image feature value; and a provider that provides editing support information by causing a display to display a classification result by the classifier, wherein the classifier sets, as a first image set, images classified as belonging to a cluster including a predetermined ratio or more of the plurality of images with respect to a total number of the plurality of images by classification based on the image feature value, wherein the provider causes the display to display the images belonging to the first image set and other images distinguishably.

The invention according to claim 2 is the image editing device according to claim 1, wherein the image feature value is an element forming a design, and the image feature value includes at least one or more pieces of information among a direction of a line segment, a thickness of a line segment, a line type of a line segment, a color, a ratio of colors, a shape of an object, a material appearance, a texture, a margin percentage, a three-dimensionality, a font shape of a character, a layout, presence or absence of a specific motif, and an occupied area percentage of the specific motif.

The invention according to claim 3 is the image editing device according to claim 1 or 2, wherein the classifier uses a cluster analysis method in classification based on the image feature value.

The invention according to claim 4 is the image editing device according to claim 1 or 2, wherein, by classification based on the image feature value, the classifier: sets as a second image set, images classified as belonging to a cluster including a second predetermined ratio smaller than the predetermined ratio or more of the plurality of images with respect to the total number of the plurality of images; and sets, as a third image set, images classified as belonging to a cluster including a third predetermined ratio smaller than the second predetermined ratio or more of the plurality of images with respect to the total number of the plurality of images, wherein the provider causes the display to distinguishably display the images belonging to the first image set, the images belonging to the second image set, and the images belonging to the third image set.

The invention according to claim 5 is the image editing device according to claim 4, further comprising: an adjuster that adjusts a determination criterion for classifying each of the clusters classified based on the image feature value by the classifier into the first image set, the second image set, and the third image set.

The invention according to claim 6 is the image editing device according to claim 5, wherein the determination criterion is defined by a ratio of a number of images belonging to each of the clusters with respect to the total number of the plurality of images.

The invention according to claim 7 is the image editing device according to claim 5, wherein the cluster including the predetermined ratio or more of the plurality of images is a cluster having a largest number of images among the clusters classified based on the image feature value, wherein the determination criterion is defined by a degree of similarity between each of the clusters and the cluster having the largest number of images.

The invention according to claim 8 is the image editing device according to claim 4, wherein the provider causes the display to display the images belonging to the second image set in preference to the images belonging to the first image set or the images belonging to the third image set.

The invention according to claim 9 is the image editing device according to claim 4, wherein the provider causes the display to display at least one or more of the images belonging to the first image set, at least one or more of the images belonging to the second image set, and at least one or more of the images belonging to the third image set.

The invention according to claim 10 is the image editing device according to claim 1 or 2, wherein the provider causes the display to display a plurality of patterns of layouts of images to be displayed on the display, thereby providing the plurality of patterns of layouts as a part of the editing support information.

The invention according to claim11 is the image editing device according to claim 1 or 2, wherein when a user selects one of the images displayed on the display, the provider infers an impression of the image from the image feature value of the one of the images and provides the inferred impression as a part of the editing support information.

The invention according to claim 12 is the image editing device according to claim 4, wherein when a user selects an impression for one image set among the first image set, the second image set, and the third image set, the provider extracts an image with an image feature value similar to the image feature value associated with the selected impression from the images in the one image set to be processed and provides the extracted image as a part of the editing support information.

The invention according to claim 13 is An image editing method comprising: an extracting process to extract an image feature value from a plurality of images obtained by search; a classifying process to classify the plurality of images based on the extracted image feature value; and a providing process to provide editing support information by causing a display to display a classification result by the classifying process, wherein in the classifying process, images classified as belonging to a cluster including a predetermined ratio or more of images with respect to a total number of the plurality of images by classification based on the image feature value are set as a first image set, wherein in the providing process, the images belonging to the first image set and other images are displayed distinguishably on the display.

The invention according to claim 14 is an image editing program that causes a computer to function as: an extractor that extracts an image feature value from a plurality of images obtained by search; a classifier that classifies the plurality of images based on the extracted image feature value; and a provider that provides editing support information by causing a display to display a classification result by the classifier, wherein the classifier sets, as a first image set, images classified as belonging to a cluster including a predetermined ratio or more of images with respect to a total number of the plurality of images by classification based on the image feature value, wherein the provider causes the display to display the images belonging to the first image set and other images distinguishably.

### Advantageous Effects of Invention

According to the present invention, it is possible to support editing work of a user who uses a searched image.

### Brief Description of Drawings

[Fig. 1] This is a block diagram showing a functional configuration of an image editing device in a first embodiment of the present invention.
[Fig. 2] This is a flowchart showing first design creation processing.
[Fig. 3] This is an example of a design creation screen.
[Fig. 4] This is an example of a keyword input screen.
[Fig. 5] This is a diagram for explaining an example of a cluster classification method.
[Fig. 6] This is an example of a search result display screen.
[Fig. 7] This is a flowchart showing second design creation processing according to a second embodiment.
[Fig. 8] This is an example of a design creation screen including a layout proposal area.
[Fig. 9] This is an example of an impression correspondence table in a third embodiment.
[Fig. 10] This is a flowchart showing third design creation processing in the third embodiment.
[Fig. 11A] This is an example of an impression display screen.
[Fig. 11B] This is an example of the impression display screen.
[Fig. 12] This is a flowchart showing fourth design creation processing according to a fourth embodiment.
[Fig. 13] This is an example of an impression word list screen.
[Fig. 14A] This is an example of a second image set display screen before an impression word is selected.
[Fig. 14B] This is an example of the second image set display screen after an impression word is selected. Description of Embodiments

In the following, embodiments of the present invention will be described with reference to the drawings. However, the scope of the invention is not limited to the illustrated examples. In each embodiment, data of an "image" includes design data representing elements constituting an image, such as a font of a character, in addition to a pattern such as a photograph or an illustration.

### [First Embodiment]

First, a first embodiment of the present invention will be described.

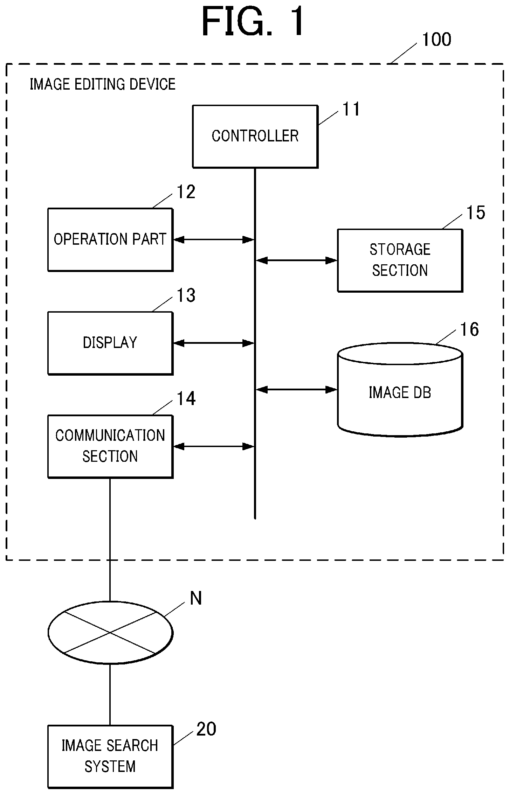

Fig. 1 shows a functional configuration of an image editing device 100 according to the first embodiment. As shown in Fig. 1, the image editing device 100 is configured to include a controller 11, an operation part 12, a display 13, a communication section 14, a storage section 15, an image database (DB) 16, and the like, and each unit is connected by a bus. The image editing device 100 is formed by a computer device such as a personal computer (PC).

The controller 11 includes a CPU (Central Processing Unit), a RAM (Random Access Memory) and the like and comprehensively controls the processing operation of each section of the image editing device 100. To be specific, the CPU reads various processing programs stored in the storage section 15, loads the programs into the RAM, and performs various kinds of processing in cooperation with the programs.

The operation part 12 includes a keyboard including cursor keys, character/number input keys, and various function keys, and a pointing device such as a mouse, and outputs, to the controller 11, operation signals input by a key operation on the keyboard or a mouse operation. Furthermore, the operation part 12 may include a touch screen laminated on the display 13, receive a user's input to the display screen, and output an operation signal corresponding to the position of the touch operation to the controller 11.

The display 13 includes a monitor such as a liquid crystal display (LCD) and displays various screens according to instructions of display signals input from the controller 11.

The communication section 14 includes a network interface or the like, and transmits and receives data to and from an external device connected via a communication network N such as a local area network (LAN), a wide area network (WAN), or the Internet.

For example, the communication section 14 is connected to an image search system 20 via the communication network N and receives a search result from the image search system 20. As the image search system 20, a system that can provide data of images such as photographs and illustrations for a fee or for free can be used.

The storage section 15 includes an HDD (hard disk drive) and a nonvolatile semiconductor memory, and stores various processing programs and data necessary for executing the programs. For example, the storage section 15 stores a program of software usable for design creation (hereinafter referred to as "design creation software"). An image editing program according to the present invention is incorporated in the program of the design creation software.

In an image DB 16, a plurality of images are saved and managed so as to be searchable.

In the following description, a case where an image retrieved using the image search system 20 is set as a processing target will be described, but an image retrieved from the image DB 16 may be set as a processing target.

The controller 11 executes an image search using the image search system 20. Specifically, the controller 11 receives an input of a search keyword from the operation part 12, and transmits the search keyword to the image search system 20 via the communication section 14. Then, the controller 11 acquires a plurality of images matching the search keyword as a search result from the image search system 20 via the communication section 14.

The controller 11 extracts image feature values from the plurality of images obtained by the search. That is, the controller 11 functions as an extractor.

An image feature value is an element constituting the design, and is a physical quantity obtained from the image.

The image feature value includes at least one or more pieces of information among a direction of a line segment, a thickness of a line segment, a line type of a line segment, a color, a ratio of colors, a shape of an object, a material appearance, a texture, a margin percentage, a three-dimensionality, a font shape of a character, a layout, presence or absence of a specific motif, and an occupied area percentage of a specific motif.

The "direction of line segment", the "thickness of line segment", and the "line type of line segment" are values indicating characteristics of the direction, the thickness, and the line type (a pattern of a wavy line, a dotted line, or the like) of the line segment drawn in a picture, and may be values measured (acquired) from the image or values obtained by a mathematical expression.

The "color" is a value indicating a feature of the color (hue, saturation, and brightness) of an image and is a value measured (acquired) from the image. The "ratio of colors" constituting an image is a value indicating the feature of the color scheme of the image, and is a value measured (acquired) from the image.

The "shape of the object" is a value indicating a feature of the shape (a geometric figure such as a triangle, a quadrangle, or a circle, or another shape) of the object to be drawn, and may be a value measured (acquired) from the image or a value obtained by a mathematical expression.

The "material appearance" and the "texture" are values indicating features of a luminance distribution or a color distribution representing a visual and tactile material appearance and texture of an image, and may be values measured (acquired) from an image or values obtained by a mathematical expression.

The "margin percentage" is a value representing the proportion of an area in an image recognized as a margin by a person. For example, a region recognized as an object in the image is extracted, and the other region is defined as a margin. The "margin percentage" is an area ratio occupied by gradation satisfying a predetermined condition in the image or a value having a strong correlation with the area ratio, and may be a value measured (acquired) from the image or a value obtained by a mathematical expression.

The "three-dimensionality" is a value indicating presence or absence of a color combination, a gradation, and a ridge line, and the arrangement thereof, which causes a three-dimensionality to be perceived, and may be a value measured (acquired) from an image or a value obtained by a mathematical expression.

The "font shape of character" is a value indicating a feature of the font shape of characters, and may be a value measured (acquired) from the image or a value obtained by a mathematical expression.

The "layout" is a value indicating a feature of the layout, and may be a value measured (acquired) from an image or a value obtained by a mathematical expression. The "layout" of the image feature value is obtained by digitizing a feature representing an arrangement on a two-dimensional coordinate. For example, there is a method of obtaining whether or not the pixels are arranged in a "Z" shape by a difference of pixel values in comparison with an image in which "Z" is drawn.

The "presence or absence of a specific motif" and the "occupied area ratio of a specific motif" are values indicating the presence or absence of a specific motif and the occupied area ratio of a specific motif, respectively, and may be values measured (acquired) from an image or values obtained by a mathematical expression.

The controller **11** classifies the plurality of images obtained by the search, based on the image feature values extracted from each image. That is, the controller **11** functions as a classifier.

For example, the controller **11** can use a cluster analysis method for the classification based on the image feature values, but a method is not limited thereto.

The cluster analysis is a statistical analysis method. The cluster analysis includes a hierarchical cluster analysis represented by the Ward method and the shortest distance method, and a non-hierarchical cluster analysis represented by the k-means method and the optimization method.

The controller **11** sets, as a first image set, images classified as belonging to a cluster including a predetermined ratio or more of images with respect to the total number of the plurality of images by classification based on the image feature values. That is, the controller **11** classifies the plurality of images obtained by the search into at least two groups (the first image set and the others).

The controller **11** provides editing support information by causing the display 13 to display the classification result of the plurality of images. That is, the controller **11** functions as a provider. The editing support information is information that supports editing work when the user edits an image. The classification result includes the classification groups and the images belonging to each group.

The controller **11** causes the display 13 to display the images belonging to the first image set and the other images distinguishably.

Further, images other than the images belonging to the first image set may be further divided into a plurality of groups.

The controller **11** sets, as a second image set, images classified as belonging to a cluster including images at a ratio in number smaller than the predetermined ratio and equal to or greater than a second predetermined ratio with respect to the total number of the plurality of images by classification based on the image feature values.

The controller 11 sets, as a third image set, images classified as belonging to a cluster including images at a ratio in number smaller than the second predetermined ratio with respect to the total number of the plurality of images by the classification based on the image feature values.

The controller 11 causes the display 13 to display the images belonging to the first image set, the images belonging to the second image set, and the images belonging to the third image set distinguishably.

The images belonging to the first image set are images having impressions of "typical" and "commonplace" as images associated with the keywords used in the search.

The images belonging to the second image set are images having an impression of "novel", and are images that are highly likely to attract the viewer's interest.

The images belonging to the third image set are images having impressions of "peculiar (unacceptable)" beyond "novelty", and are images that are less likely to attract the viewer's interest. The images belonging to the third image set might not match impressions associated with the keywords used for the search.

In the classification of the plurality of images, the controller 11 adjusts determination criteria for classifying the clusters classified based on the image feature values into the first image set, the second image set, and the third image set. That is, the controller 11 functions as an adjuster. For example, in the image editing device 100, when the administrator inputs a determination criterion on the setting screen displayed on the display 13 via the operation part 12, the controller 11 adjusts the determination criterion. The determination criterion is, for example, a threshold used for determining to which image set each image belongs.

For example, the determination criteria is defined as a ratio of the number of images belonging to each cluster with respect to the total number of the plurality of images.

Furthermore, in a case where a cluster including a predetermined ratio or more of images is a cluster having the largest number of images among the clusters classified based on the image feature values, the determination criterion may be defined by the degree of similarity between each cluster and the cluster having the largest number of images.

As the degree of similarity between clusters, for example, a distance in a multidimensional space corresponding to the number of the image feature values used can be used. The distance between clusters is the distance between the centroids of the clusters. The smaller the distance between clusters, the higher the degree of similarity.

The controller 11 causes the display 13 to display the images belonging to the second image set in preference to the images belonging to the first image set or the third image set. The second set of images corresponds to a MAYA phase based on the MAYA (Most Advanced Yet Acceptable) theory.

The controller 11 causes the display 13 to display at least one or more images belonging to the first image set, at least one or more images belonging to the second image set, and at least one or more images belonging to the third image set.

Next, operations of the image editing device 100 will be described.

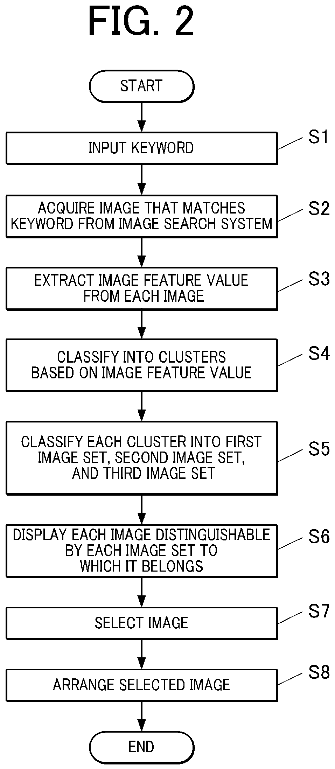

Fig. 2 is a flowchart showing first design creation processing executed by the image editing device 100. This processing is realized by software processing in cooperation between the CPU of the controller 11 and the program stored in the storage section 15 when the design creation software is activated in the image editing device 100.

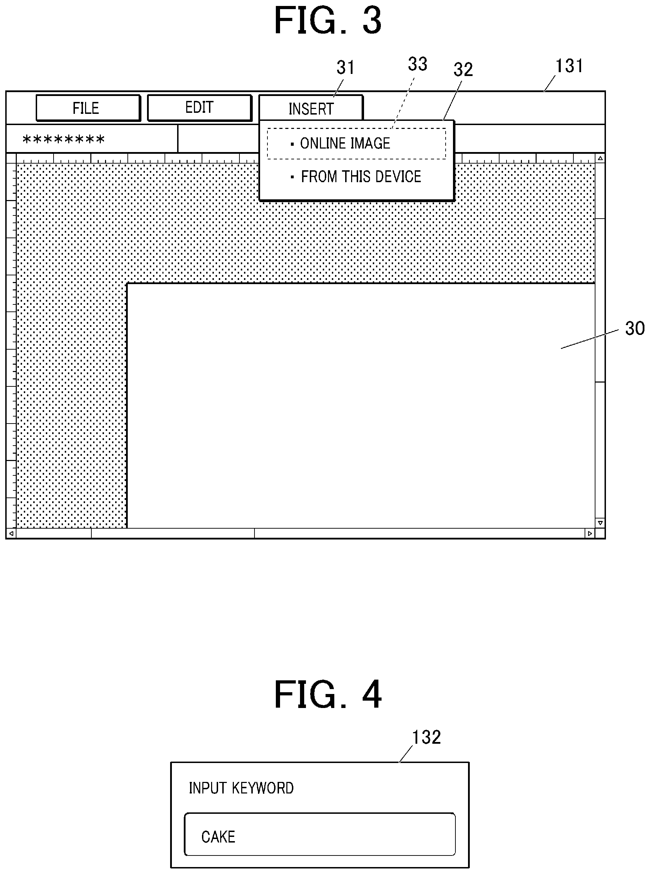

Fig. 3 shows an example of a design creation screen 131 displayed on the display 13. The design creation screen 131 is used when a design image is created in an image editing area 30, for example, by combining images or adjusting colors.

In the design creation screen 131, when the user operates the operation part 12 to select an "insert" tab 31 from the menu and instruct insert of an image, a search target selection area 32 is displayed. When the user operates the operation part 12 to select an "online image" 33 in the search target selection area 32, the controller 11 causes the display 13 to display a keyword input screen 132 illustrated in Fig. 4.

When the user operates the operation part 12 to input a keyword (here, "cake") to the keyword input screen 132 (Step S1), the controller 11 transmits the keyword to the image search system 20 via the communication section 14. The image search system 20 searches for images on the basis of the keyword and transmits a plurality of images obtained by the search to the image editing device 100 via the communication network N.

The controller 11 acquires a plurality of images matching the keyword as a search result from the image search system 20 via the communication section 14 (step S2). Here, if necessary, the controller 11 may randomly narrow down the number of images to be processed (so that the content of the images is not biased).

Next, the controller 11 extracts an image feature value from each image obtained by the search (Step S3). For example, the controller 11 extracts a dominant color from each image. The dominant colors represent several main colors forming an image and ratios of the colors occupying a screen by performing color reduction processing in which colors similar to each other are combined into the same color for colors of respective pixels forming the image. The image feature value used for image classification may be an image feature value other than the dominant colors, or may be a data set (numerical value matrix) in which the dominant colors and other image feature values are associated with each other.

Next, the controller 11 classifies the images obtained by the search into a plurality of clusters on the basis of the image feature values (Step S4).

Next, the controller 11 classifies the clusters classified based on the image feature values into the first image set, the second image set, and the third image set (Step S5).

Specifically, the controller 11 classifies each cluster into the first image set and the others according to the ratio of the number of images belonging to each cluster with respect to the total number of images. For example, the controller 11 sets a cluster having the largest number of images as the first image set, that is, "typical images".

Further, the controller 11 classifies clusters other than the clusters classified into the first image set into the second image set and the third image set. For example, the controller 11 sets a cluster having the smallest number of images as the third image set (peculiar images), and sets a cluster belonging to neither the first image set nor the third image set as the second image set (novel images). A cluster that does not belong to any of the first image set, the second image set, and the third image set may exist.

In addition, the controller 11 may classify the images belonging to each image set into smaller groups based on an image feature value (physical quantity) such as brightness.

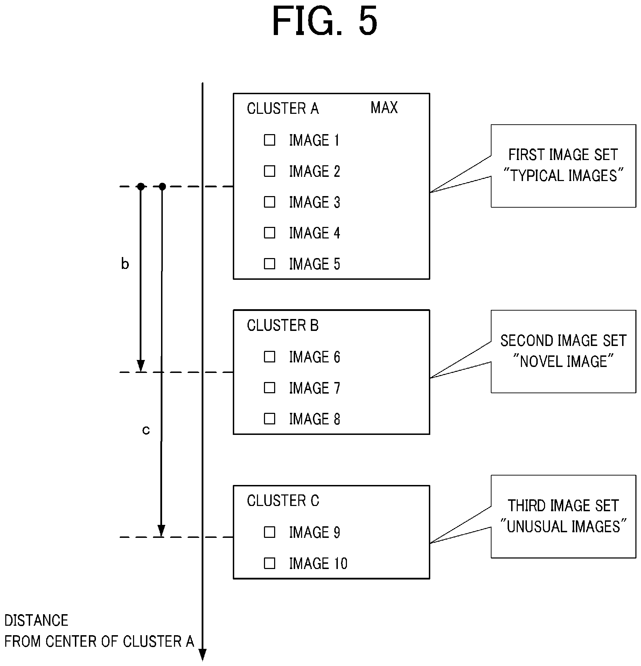

As shown in FIG. 5, a cluster classification method based on the degree of similarity between clusters (for example, the distance in a multidimensional space corresponding to the number of image feature values to be used) may be used.

A cluster A having the largest number of images is set as the first image set (typical images). The cluster A includes images 1 to 5.

The cluster B includes images 6 to 8.

The cluster C includes images 9 and 10.

A distance between the centroid of the cluster A and the centroid of the cluster B is defined as b, and a distance between the centroid of the cluster A and the centroid of the cluster C is defined as c. Since the distance b is smaller than the distance c, it can be said that the similarity between the cluster A and the cluster B is higher than the similarity between the cluster A and the cluster C.

With reference to a length c to the cluster C farthest from the cluster A, a cluster whose length x from the cluster A satisfies 0. 4c < x < 0. 9c is defined as the second image set (novel images), and a cluster whose length x from the cluster A satisfies 0. 9c < x is defined as the third image set (peculiar images). Here, the cluster B is the second image set, and the cluster C is the third image set. Also in the classification method based on the similarity between clusters, there may be a cluster that does not belong to any of the first image set, the second image set, and the third image set. That is, it is sufficient that there is a cluster classified into the second image set somewhere between the cluster A and the cluster C, and there are cases where a cluster next to the cluster A or next to the cluster C does not belong to the second image set.

Next, the controller 11 causes the display 13 to display the images distinguishable by the image sets to which the images belong (Step S6).

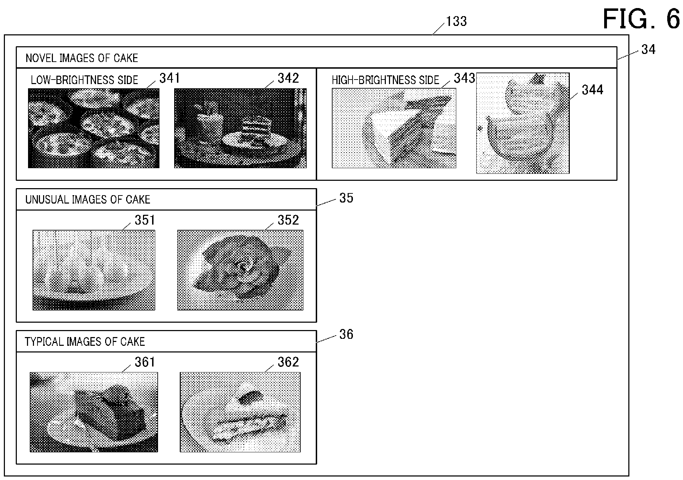

Fig. 6 shows an example of a search result display screen 133 to be displayed on the display 13. The search result display screen 133 includes a second image set display area 34, a third image set display area 35, and a first image set display area 36.

In the second image set display area 34, images (novel images) 341 to 344 which belong to a cluster in which the number of images is smaller than the predetermined number and which do not belong to the third image set are displayed. Here, the images belonging to the second image set are further divided into the low brightness side including the images 341 and 342 and the high brightness side including the images 343 and 344 on the basis of brightness.

In the third image set display region 35, the images (peculiar images) 351 and 352 belonging to a cluster having the smallest number of images are displayed.

In the first image set display area 36, the images (typical images) 361 and 362 belonging to a cluster having the largest number of images are displayed.

As in the search result display screen 133 shown in Fig. 6, the content (classification result) in which the images belonging to the first image set, the images belonging to the second image set, and the images belonging to the third image set are displayed distinguishably corresponds to the editing support information.

On the search result display screen 133, the second image set display area 34 is arranged at the top, so that the second image set is preferentially recommended as compared with the third image set and the first image set.

In the second image set display area 34, the third image set display area 35, and the first image set display are 36 of the search result display screen 133, all of the images belonging to each image set may not be displayed, and one or more images among the images belonging to each image set may be displayed.

Next, the controller 11 receives selection of an image to be used for design by a user's operation on the operation part 12 (Step S7). For example, the user selects the image 341 from the second image set display area 34 of the search result display screen 133.

Next, the controller 11 arranges the selected image in the designated area on the design creation screen by the operation of the user from the operation part 12 (Step S8).

This is the end of the first design creation processing.

As described above, according to the first embodiment, the controller 11 of the image editing device 100 classifies the plurality of images obtained by the search on the basis of the image feature values and sets, as the first image set, the images classified as belonging to the cluster including the images at the predetermined ratio or higher with respect to the total number of the plurality of images, thereby allowing the plurality of images to be displayed while being distinguished into at least two groups (the first image set and the others). This display manner corresponds to the editing support information, and the user can recognize whether each image is a "typical image" by referring to the editing support information. Therefore, it is possible to support the editing work of the user who uses the searched image.

For example, when it is desired to use an image having a novel impression with respect to the keyword used for the search, an image may be selected from images other than the first image set. Usually, it is considered that an image having a novel impression attracts the viewer's interest more strongly. On the other hand, when it is desired to use an image having a general impression with respect to the keyword used for the search, an image may be selected from the first image set.

In addition, the images other than the images belonging to the first image set are further classified into a plurality of groups (second image set and third image set), and the images belonging to the first image set, the images belonging to the second image set, and the images belonging to the third image set are displayed distinguishably from each other, and thus it is possible to provide the user with information such as novelty and ease of attracting interest of each image.

For example, for the images belonging to the second image set, it is possible to efficiently present a "novel image" that attracts the most interest of the viewer, which is referred to as a MAYA phase, and it becomes easy for the user to select an image that is effective in creating a design.

An image belonging to the third image set may give an impression that the image is too peculiar to be accepted.

In addition, by displaying the images belonging to the second image set in preference to the images belonging to the first image set or the third image set (at the top in the example of Fig. 6), it is possible to make the images belonging to the second image set, which are expected to be most interesting, most conspicuous.

Furthermore, providing a design creation tool (design creation software) with the function of classifying images obtained by search on the basis of image feature values and displaying the images distinguishably on a group-by-group basis can assist the user in editing work.

Although the images 341 to 344 displayed in the second image set display area 34 are treated as "novel images" and the images 351 and 352 displayed in the third image set display area 35 are treated as "peculiar images" on the search result display screen 133 shown in Fig. 6, the second image set and the third image set may be treated as "novel images" at the same level.

### [Second Embodiment]

Next, a second embodiment to which the present invention is applied will be described.

Since the image editing device according to the second embodiment has the same configuration as that of the image editing device 100 according to the first embodiment, Fig. 1 is also used, and illustration and description of the configuration thereof are omitted. Hereinafter, configurations and processes characteristic of the second embodiment will be described.

In the second embodiment, in addition to the same functions as those of the first embodiment, a layout automatic display function is provided for an image obtained by a search.

The controller 11 of the image editing device 100 causes the display 13 to display multiple patterns of layouts of the image to be displayed on the display 13, thereby providing the multiple patterns of layouts as part of the editing support information.

Next, the operation of the image editing device 100 according to the second embodiment will be described.

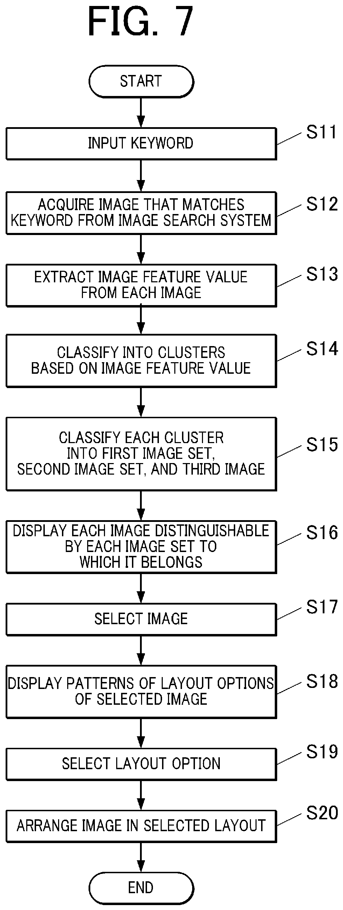

Fig. 7 is a flowchart showing second design creation processing executed by the image editing device 100. This processing is realized by software processing in cooperation between the CPU of the controller 11 and the program stored in the storage section 15 when the design creation software is activated in the image editing device 100.

Since the processing of Steps S11 to S17 is the same as the processing of Steps S1 to S7 of the first design creation processing (see Fig. 2), description thereof will be omitted.

After Step S17, the controller 11 creates multiple patterns of layout options for the selected image and causes the display 13 to display them (Step S18).

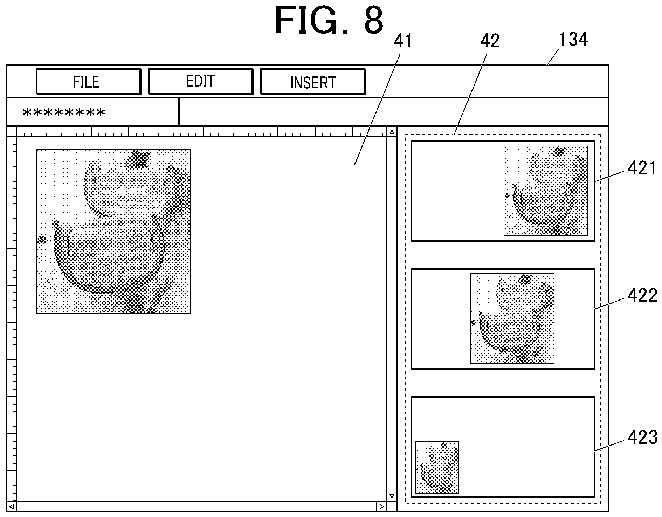

Fig. 8 shows an example of a design creation screen 134 displayed on the display 13. The design creation screen 134 includes an image editing area 41 and a layout suggestion area 42. In the image editing area 41, the image selected by the user in Step S17 is displayed. In the layout suggestion area 42, for the selected image, multiple patterns of layout options 421 to 423, which respectively have different sizes and arrangements of the image, are displayed. The layout options 421 to 423 correspond to the editing support information.

Next, the controller 11 receives selection of a layout option by a user's operation on the operation part 12 (Step S19).

Next, the controller 11 arranges the images selected in Step S17 in the layout selected in Step S19 (Step S20).

For example, in the design creation screen 134, when the user operates the operation part 12 to select one of the layout options from the layout suggestion area 42, the size and arrangement of the image in the image editing area 41 conform to the selected layout option.

Here, the second design creation processing is completed.

As described above, according to the second embodiment, the controller 11 of the image editing device 100 provides multiple patterns of layouts as a part of the editing support information for the image displayed on the display 13, so that the user can determine the position and size of the image to be inserted with reference to the layouts.

Although multiple patterns of layout options for the image selected by the user are presented in the above-described second embodiment, multiple patterns of layout options may be displayed for each of the images when the images are displayed distinguishable by group.

### [Third Embodiment]

Next, a third embodiment to which the present invention is applied will be described.

Since the image editing device according to the third embodiment has the same configuration as that of the image editing device 100 according to the first embodiment, Fig. 1 is also used, and illustration and description of the configuration thereof are omitted. Hereinafter, configurations and processes characteristic of the third embodiment will be described.

In the third embodiment, for an image to be processed, an impression given by the image is presented.

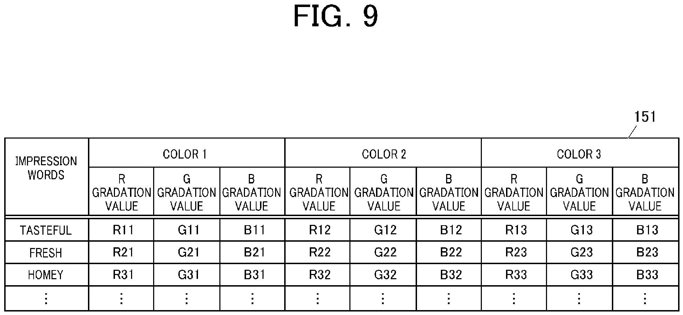

The storage section 15 of the image editing device 100 stores an impression correspondence table 151 (see Fig. 9) as associated information in which an impression given by an image and an image feature value of the image are correlated with each other.

Fig. 9 shows an example of the impression correspondence table 151. In the impression correspondence table 151, color arrangement patterns (colors 1 to 3) and impression words (adjectives, metaphorical expressions, and the like) indicating impressions that the color arrangement patterns give to a viewer are associated with each other. The color arrangement pattern is a combination of a plurality of colors (here, three colors). Each color included in the color arrangement pattern is indicated by gradation values of RGB.

By referring to the impression correspondence table 151, the impression given by the image can be acquired from the image feature value of the image, and the image feature value to be included in the image can be acquired from the impression required for the image.

Here, a case where the impression correspondence table 151 is used will be described, but a correlation formula created on the basis of a correspondence relationship between an impression given by an image and an image feature value of the image may be used as the associated information.

Furthermore, as the associated information, for each of sample images, a machine learning model that has learned the image feature values of the sample images as input and the impression words of the sample images evaluated by a plurality of test subjects as output may be used. In addition, the image feature value corresponding to the impression word may be output from the designated impression word based on this machine learning result.

When a user selects any image from among the images displayed on the display 13, the controller 11 of the image editing device 100 infers an impression of the selected image from the image feature value of the selected image, and provides the inferred impression as a part of the editing support information. Specifically, the controller 11 infers the impression of the selected image from the image feature value of the selected image, based on the associated information (impression correspondence table 151) in which the impression given by the image and the image feature value of the image are associated with each other.

In the impression correspondence table 151, an image feature value other than colors may be included as the image feature value associated with each impression word.

Parameters (image feature values) used to infer an impression of the image include, in addition to the above-described image feature values, the complexity of the image, the character area ratio, the jump ratio (the size ratio of character strings present in the image), and the like.

The "complexity" is a value representing the degree to which lines that a person recognizes as contours occupy an image, and corresponds to the writing amount of a so-called line drawing or the like. For example, a fractal dimension is calculated based on a box count method with respect to the distribution of the gradation values of the pixels constituting the image, and the calculated fractal dimension is defined as the complexity.

The "character area ratio" is a ratio of an area of a region occupied by characters to the entire image.

The "jump ratio" is the ratio of sizes of character strings in the image, where a character string consecutively arranged without a line break is extracted as one block, and the area of a region occupied by the extracted block of the character string is defined as the size of the character string. For example, the ratio of the size of another character string (heading or the like) to the size of the character string of the body text is defined as the jump rate.

Next, the operation of the image editing device 100 according to the third embodiment will be described.

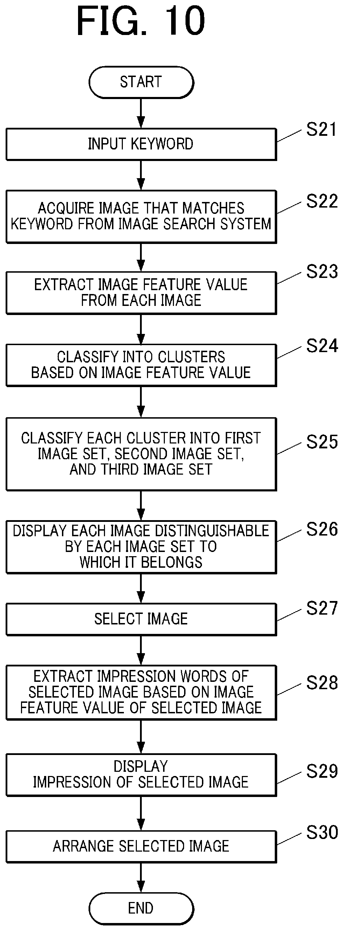

Fig. 10 is a flowchart showing third design creation processing executed by the image editing device 100. This processing is realized by software processing in cooperation between the CPU of the controller 11 and the program stored in the storage section 15 when the design creation software is activated in the image editing device 100.

Since the processing of Steps S21 to S27 is the same as the processing of Steps S1 to S7 of the first design creation processing (see Fig. 2), description thereof will be omitted.

After Step S27, the controller 11 extracts an impression word of the image based on the image feature value of the selected image (Step S28).

To be specific, the controller 11 compares the dominant color of the selected image (the image feature value extracted in Step S23) with each coloring pattern of the impression correspondence table 151, and calculates the similarity between the dominant color of the selected image and the color combination of each color arrangement pattern. The controller 11 infers, as the impression word of the selected image, an impression word associated with a color arrangement pattern having a relatively high degree of similarity to the dominant color of the selected image. For example, the controller 11 determines a predetermined number of color arrangement patterns in descending order of similarity to the dominant color of the selected image to have a relatively high similarity.

Next, the controller 11 causes the display 13 to display an impression that the selected image is estimated to give to the viewer (Step S29).

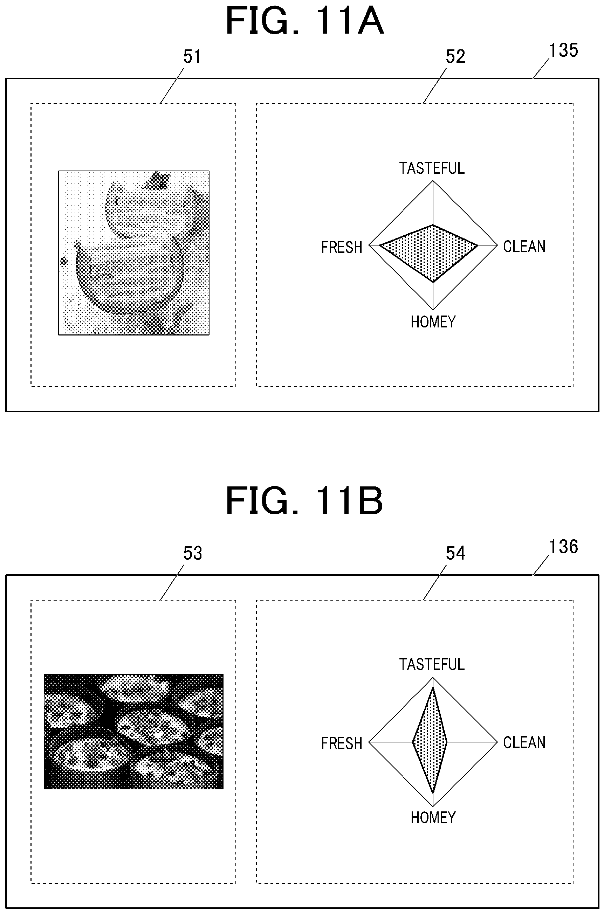

Figs. 11A and 11B show examples of impression display screens 135 and 136 displayed on the display 13.

When the image 344 is selected from the second image set display area 34 of the search result display screen 133 shown in Fig. 6 in Step S27, the controller 11 causes the display 13 to display the impression display screen 135 shown in Fig. 11A in Step S29. The impression display screen 135 includes an image display area 51 and an impression display area 52. In the image display area 51, the selected image is displayed. In the impression display area 52, an impression estimated to be given to the viewer by the selected image is displayed. In the impression display area 52, the controller 11 sets an axis for an impression word associated with a color arrangement pattern having a relatively high degree of similarity to the dominant color of the selected image, and represents the degree of similarity corresponding to each impression word by a radar chart.

When the image 341 is selected from the second image set display region 34 of the search result display screen 133 shown in Fig. 6 in Step S27, the controller 11 causes the display 13 to display the impression display screen 136 shown in Fig. 11B in Step S29. The image display area 53 and the impression display area 54 included in the impression display screen 136 are similar to the image display area 51 and the impression display area 52 included in the impression display screen 135.

Each impression word in the radar chart displayed in the impression display area 52 of the impression display screen 135 and the impression display area 54 of the impression display screen 136 corresponds to the editing support information.

Next, the controller 11 arranges the image selected in Step S27 in a specified area on the design creation screen by a user's operation on the operation part 12 (Step S30). The user considers the arrangement of the image with reference to the displayed information.

Here, the third design creation processing is completed.

As described above, according to the third embodiment, since the controller 11 of the image editing device 100 infers the impression of the image selected by the user from the image feature value of the selected image and provides the inferred impression as a part of the editing support information, the user can determine the image to be used with reference to the impression of the image.

### [Fourth Embodiment]

Next, a fourth embodiment to which the present invention is applied will be described.

Since the image editing device according to the fourth embodiment has the same configuration as the image editing device 100 according to the first embodiment, Fig. 1 is also used, and illustration and description of the configuration thereof are omitted. Hereinafter, configurations and processes characteristic of the fourth embodiment will be described.

In the fourth embodiment, a plurality of images obtained by the search can be further narrowed down by designating an impression to be given to the viewer.

Also in the fourth embodiment, the impression correspondence table 151 (see Fig. 9) is stored as associated information in which an impression given by an image and an image feature value of the image are correlated with each other in the storage section 15 of the image editing device 100.

When the user selects an impression for any one of the first image set, the second image set, and the third image set, the controller 11 of the image editing device 100 extracts an image having an image feature value similar to the image feature value associated with the selected impression among the images belonging to the image set to be processed, and provides the extracted image as a part of the editing support information. Specifically, the controller 11 acquires the image feature value associated with the selected impression on the basis of the associated information in which the impression given by the image is associated with the image feature value of the image, and extracts the image of the image feature value similar to the acquired image feature value.

Next, the operation of the image editing device 100 according to the fourth embodiment will be described.

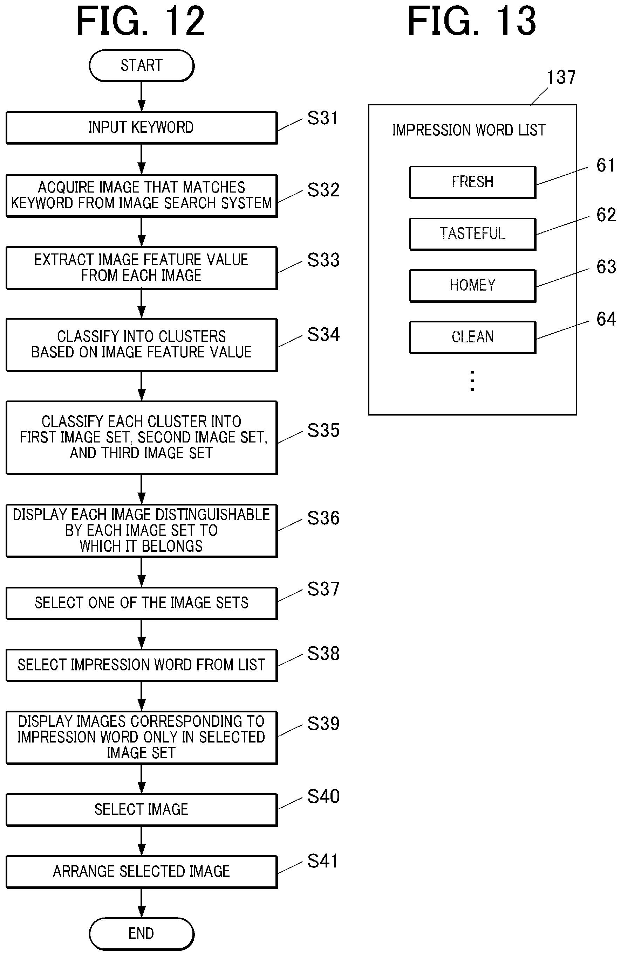

Fig. 12 is a flowchart showing fourth design creation processing executed by the image editing device 100. This processing is realized by software processing in cooperation between the CPU of the controller 11 and the program stored in the storage section 15 when the design creation software is activated in the image editing device 100.

Since the processing of Steps S31 to S36 is the same as the processing of Steps S1 to S6 of the first design creation processing (see Fig. 2), description thereof will be omitted.

After Step S36, the controller 11 accepts selection of any one of the first image set, the second image set, and the third image set by the user's operation on the operation part 12 (Step S37). The user selects an image set to be processed.

Next, the controller 11 receives selection of one of the impression words from the list displayed on the display 13 by a user's operation on the operation part 12 (Step S38).

Fig. 13 shows an example of an impression word list screen 137 to be displayed on the display 13. Impression words 61, 62, 63, 64, ... such as "refreshing", "tasteful", "household", and "clean" are displayed on the impression word list screen 137.

The controller 11 allows the display 13 to display only the images corresponding to the impression word selected in Step S37 in the image set selected in Step S38, and does not display the other images (Step S39).

Specifically, the controller 11 acquires the color arrangement pattern corresponding to the selected impression word with reference to the impression correspondence table 151 (associated information) shown in Fig. 9. For each image belonging to the selected image set, the controller 11 calculates the similarity between the dominant color of the image (the image feature value extracted in Step S33) and the color arrangement pattern corresponding to the selected impression word. The controller 11 determines that an image having a similarity to the color arrangement pattern corresponding to the selected impression word of a predetermined value or more corresponds to the selected impression word.

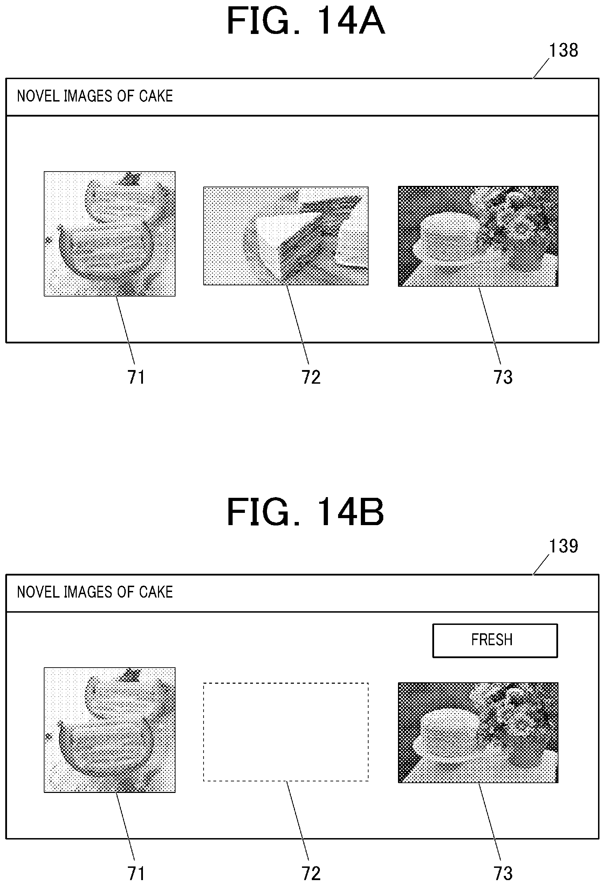

Figs. 14A and 14B show display examples before and after an impression word is selected. It is assumed that the second image set is selected in Step S37.

Fig. 14A is an example of a second image set display screen 138 displayed on the display 13 before an impression word is selected. The second image set display screen 138 shows the images 71, 72, and 73 classified into the second image set.

Fig. 14B is an example of a second image set display screen 139 displayed on the display 13 after an impression word is selected. On the second image set display screen 139, the images 71 and 73 after being narrowed down by the impression word "refreshing" are displayed, and the image 72 not corresponding to the impression word "refreshing" is not displayed. The images 71 and 73 corresponding to the selected impression word in the second image set display screen 139 correspond to the editing support information.

Next, the controller 11 receives selection of an image to be used for design by a user's operation on the operation part 12 (Step S40).

Next, the controller 11 arranges the selected image in the designated area on the design creation screen by the operation of the user from the operation part 12 (Step S41).

Here, the fourth design creation processing is completed.

As described above, according to the fourth embodiment, the controller 11 of the image editing device 100 extracts, from among the images belonging to the image set to be processed (the first image set, the second image set, the third image set), the image having the image feature value (dominant color) similar to the image feature value (color arrangement pattern) associated with the selected impression, and provides the extracted image as part of the editing support information, thereby enabling the user to determine the image to be used with reference to the impression of the image.

The descriptions in the above embodiments are examples of the image editing device, the image editing method, and the image editing program according to the present invention, and the present invention is not limited thereto. The detailed configuration and detailed operation of each component constituting the device can also be appropriately changed without departing from the spirit of the present invention.

For example, characteristic processes in the respective embodiments may be combined.

In addition, the number of clusters classified into the first image set is not limited to one, and in a case where there are a plurality of "clusters including a predetermined proportion or more of images with respect to the total number of the plurality of images", the plurality of clusters may be classified into the first image set.

In addition, the images other than the first image set are not necessarily classified into the second image set and the third image set, and may be classified into the first image set (typical images) and the others.

Further, when the images belonging to the respective groups (the first image set, the second image set, and the third image set) are displayed, information for recommending the respective images may be added using numerical values or sentences related to the respective images.

Further, the functions of the image editing device 100 may be shared and executed by a plurality of devices.

Further, the programs for executing the respective processes may be stored in a portable recording medium. Further, a carrier wave may be applied as a medium for providing program data via a communication line.

### Industrial Applicability

The image editing device, the image editing method, and the image editing program according to the present invention are applicable in the technical fields of design creation and image editing.

### Reference Signs List

- 100: IMAGE EDITING DEVICE
- 11: CONTROLLER
- 12: OPERATION PART
- 13: DISPLAY
- 14: COMMUNICATION SECTION
- 15: STORAGE SECTION
- 16: IMAGE DB
- 20: IMAGE SEARCH SYSTEM
- 34: SECOND IMAGE SET DISPLAY AREA
- 35: THIRD IMAGE SET DISPLAY AREA
- 36: FIRST IMAGE SET DISPLAY AREA
- 133: SEARCH RESULT DISPLAY SCREEN
- 151: IMPRESSION CORRESPONDENCE TABLE
- N: COMMUNICATION NETWORK

## Claims

1. An image editing device comprising:
an extractor that extracts an image feature value from a plurality of images obtained by search;
a classifier that classifies the plurality of images based on the extracted image feature value; and
a provider that provides editing support information by causing a display to display a classification result by the classifier,
wherein the classifier sets, as a first image set, images classified as belonging to a cluster including a predetermined ratio or more of the plurality of images with respect to a total number of the plurality of images by classification based on the image feature value,
wherein the provider causes the display to display the images belonging to the first image set and other images distinguishably.

2. The image editing device according to claim 1,
wherein the image feature value is an element forming a design,
wherein the image feature value includes at least one or more pieces of information among a direction of a line segment, a thickness of a line segment, a line type of a line segment, a color, a ratio of colors, a shape of an object, a material appearance, a texture, a margin percentage, a three-dimensionality, a font shape of a character, a layout, presence or absence of a specific motif, and an occupied area percentage of the specific motif.

3. The image editing device according to claim 1 or 2,
wherein the classifier uses a cluster analysis method in classification based on the image feature value.

4. The image editing device according to claim 1 or 2,
wherein, by classification based on the image feature value, the classifier:
sets as a second image set, images classified as belonging to a cluster including a second predetermined ratio smaller than the predetermined ratio or more of the plurality of images with respect to the total number of the plurality of images; and
sets, as a third image set, images classified as belonging to a cluster including a third predetermined ratio smaller than the second predetermined ratio or more of the plurality of images with respect to the total number of the plurality of images,
wherein the provider causes the display to distinguishably display the images belonging to the first image set, the images belonging to the second image set, and the images belonging to the third image set.

5. The image editing device according to claim 4, further comprising:
an adjuster that adjusts a determination criterion for classifying each of the clusters classified based on the image feature value by the classifier into the first image set, the second image set, and the third image set.

6. The image editing device according to claim 5,
wherein the determination criterion is defined by a ratio of a number of images belonging to each of the clusters with respect to the total number of the plurality of images.

7. The image editing device according to claim 5,
wherein the cluster including the predetermined ratio or more of the plurality of images is a cluster having a largest number of images among the clusters classified based on the image feature value,
wherein the determination criterion is defined by a degree of similarity between each of the clusters and the cluster having the largest number of images.

8. The image editing device according to claim 4,
wherein the provider causes the display to display the images belonging to the second image set in preference to the images belonging to the first image set or the images belonging to the third image set.

9. The image editing device according to claim 4,
wherein the provider causes the display to display at least one or more of the images belonging to the first image set, at least one or more of the images belonging to the second image set, and at least one or more of the images belonging to the third image set.

10. The image editing device according to claim 1 or 2,
wherein the provider causes the display to display a plurality of patterns of layouts of images to be displayed on the display, thereby providing the plurality of patterns of layouts as a part of the editing support information.

11. The image editing device according to claim 1 or 2,
wherein when a user selects one of the images displayed on the display, the provider infers an impression of the image from the image feature value of the one of the images and provides the inferred impression as a part of the editing support information.

12. The image editing device according to claim 4,
wherein when a user selects an impression for one image set among the first image set, the second image set, and the third image set, the provider extracts an image with an image feature value similar to the image feature value associated with the selected impression from the images in the one image set to be processed and provides the extracted image as a part of the editing support information.

13. An image editing method comprising:
an extracting process to extract an image feature value from a plurality of images obtained by search;
a classifying process to classify the plurality of images based on the extracted image feature value; and
a providing process to provide editing support information by causing a display to display a classification result by the classifying process,
wherein in the classifying process, images classified as belonging to a cluster including a predetermined ratio or more of images with respect to a total number of the plurality of images by classification based on the image feature value are set as a first image set,
wherein in the providing process, the images belonging to the first image set and other images are displayed distinguishably on the display.

14. An image editing program that causes a computer to function as:
an extractor that extracts an image feature value from a plurality of images obtained by search;
a classifier that classifies the plurality of images based on the extracted image feature value; and
a provider that provides editing support information by causing a display to display a classification result by the classifier,
wherein the classifier sets, as a first image set, images classified as belonging to a cluster including a predetermined ratio or more of images with respect to a total number of the plurality of images by classification based on the image feature value,
wherein the provider causes the display to display the images belonging to the first image set and other images distinguishably.
